# EUROPÄISCHE PATENTSCHRIFT

(11) **EP 4 075 394 B1**
(45) Veröffentlichungstag und Bekanntmachung des Hinweises auf die Patenterteilung: **20.09.2023**
(21) Anmeldenummer: 22163079.1
(22) Anmeldetag: 18.03.2022
(51) Int. Cl.: G06V 10/20, G01B 11/04, G06K 7/10, G06V 10/24, G06V 10/25, G06V 20/64, G06V 30/424, H04N 5/222

(54) **ERFASSUNG EINES BEWEGTEN STROMES VON OBJEKTEN**
DETECTING MOVING FLOWS OF OBJECTS
DÉTECTION D'UN FLUX MOBILE D'OBJETS

(30) Priorität: 12.04.2021 DE 102021109078
(43) Veröffentlichungstag der Anmeldung: 19.10.2022
(73) Patentinhaber: SICK AG, 79183 Waldkirch (DE)
(72) Erfinder: Müller, Romain, 79252 Stegen (DE); Strohmeier, Dirk, 79312 Emmendingen (DE)

(56) Entgegenhaltungen:
- EP-A1- 1 845 336
- EP-A2- 3 537 339
- WO-A1-2019/092161

## Beschreibung

Die Erfindung betrifft eine Kameravorrichtung und ein Verfahren zur Erfassung eines bewegten Stromes von Objekten nach dem Oberbegriff von Anspruch 1 beziehungsweise 15.

In industriellen Anwendungen werden Kameras in vielfältiger Weise eingesetzt, um Objekteigenschaften automatisch zu erfassen, beispielsweise zur Inspektion oder Vermessung von Objekten. Dabei werden Bilder des Objekts aufgenommen und entsprechend der Aufgabe durch Bildverarbeitungsverfahren ausgewertet. Eine weitere Anwendung von Kameras ist das Lesen von Codes. Mit Hilfe eines Bildsensors werden Objekte mit den darauf befindlichen Codes aufgenommen, in den Bildern die Codebereiche identifiziert und dann dekodiert. Kamerabasierte Codeleser kommen problemlos auch mit anderen Codearten als eindimensionalen Strichcodes zurecht, die wie ein Matrixcode auch zweidimensional aufgebaut sind und mehr Informationen zur Verfügung stellen. Auch die automatische Texterfassung von gedruckten Adressen (OCR, Optical Character Recognition) oder Handschriften ist im Prinzip ein Lesen von Codes. Typische Anwendungsgebiete von Codelesern sind Supermarktkassen, die automatische Paketidentifikation, Sortierung von Postsendungen, die Gepäckabfertigung in Flughäfen und andere Logistikanwendungen.

Eine häufige Erfassungssituation ist die Montage der Kamera über einem Förderband. Die Kamera nimmt während der Relativbewegung des Objektstroms auf dem Förderband Bilder auf und leitet in Abhängigkeit der gewonnenen Objekteigenschaften weitere Bearbeitungsschritte ein. Solche Bearbeitungsschritte bestehen beispielsweise in der an das konkrete Objekt angepassten Weiterverarbeitung an einer Maschine, die auf geförderte Objekte einwirkt, oder in einer Veränderung des Objektstroms, indem bestimmte Objekte im Rahmen einer Qualitätskontrolle aus dem Objektstrom ausgeschleust werden oder der Objektstrom in mehrere Teilobjektströme sortiert wird. Wenn die Kamera ein kamerabasierter Codeleser ist, werden die Objekte für eine korrekte Sortierung oder ähnliche Bearbeitungsschritte anhand der angebrachten Codes identifiziert.

Es stehen zunehmend leistungsfähigere Bildsensoren zur Verfügung, so dass mit wenigen Kameras ein großer Bereich beispielsweise der Breite eines Förderbandes abgedeckt werden kann. Bei unterschiedlichen Objekthöhen kommt es jedoch immer wieder zu Situationen, in denen der Tiefenschärfenbereich nicht ausreicht, alle Objekte im Sichtfeld mit ausreichender Schärfe aufzunehmen. Prinzipiell bietet hier eine Fokusverstellung einen Ausweg. Dazu ist jedoch eine schnelle Abfolge von Aufnahmen erforderlich, da ansonsten das aufzunehmende Objekt nicht mehr oder jedenfalls nicht mehr in der richtigen Perspektive erfasst wird. Die erforderliche hohe Aufnahmefrequenz ist bei einem großen Bildsensor nicht zu leisten, da mehr Daten erzeugt werden, als zwischen zwei Aufnahmen verarbeitet werden können. Kleinere Bildsensoren würden in dieser Beziehung weiterhelfen, aber dadurch würde der angestrebte Vorteil der Abdeckung eines großen Bereichs mit wenigen oder im Idealfall einer einzigen Kamera aufgegeben.

Der Tiefenschärfenbereich lässt sich prinzipiell mit einer kleinen Blende und zusätzlicher Beleuchtung erweitern, um den Lichtverlust und damit ein schlechteres Signal-RauschVerhältnis auszugleichen. Die ohnehin schon leistungsfähige Beleuchtung würde dadurch aber noch kostenträchtiger. Außerdem reduziert das die Datenlast nicht. Denkbar wäre weiterhin die Verwendung eines Bildsensors mit einem überbreiten Aspektverhältnis, mit dem das Förderband überdeckt werden könnte, ohne die Datenmenge allzu sehr in die Höhe zu treiben. Derart exotische Bildsensoren sind aber nicht erhältlich oder würden zumindest die Auswahl hinsichtlich anderer für die Bildsensoren maßgeblicher Faktoren erheblich einschränken. Außerdem hat ein großer Sichtbereich auch in Förderrichtung durchaus seine Vorteile, die mit dem überbreiten Bildsensor verloren gingen.

Die EP 1 645 838 B1 und die EP 1 645 839 B1 offenbaren jeweils eine Vorrichtung zur Überwachung von bewegten Objekten an einem Förderband. Ein Entfernungsmesser oder Laserscanner ist einer Kamera vorgelagert, und mit dessen Daten werden interessierende Bereiche bestimmt (ROI, region of interest), auf die sich die spätere Auswertung der Bilddaten beschränkt. Dabei wird eine Zeilenkamera eingesetzt, deren Bildzeilen zu einem Bild zusammengesetzt werden. Sämtliche Bilddaten fallen folglich zunächst an und werden erst im Nachhinein reduziert. Eine Matrixkamera ist lediglich nebenbei erwähnt, ohne zu erklären, wie mit deren Bilddaten umgegangen werden soll. In dieser Form verschärft eine Matrixkamera nur das Problem der Datenmengen gegenüber einer Zeilenkamera, da die Bildzeilen sogar vielfach redundant erfasst werden.

In der DE 20 2006 020 599 U1 werden vorab gemessene Geometriedaten verwendet, um interessierende Bereiche zu bestimmen und dann mit einer höheren Auflösung zu erfassen als nicht interessierende Bereiche. Der Unterschied besteht in einer Ausführungsform darin, dass Bilddaten in den interessierenden Bereichen vollständiger ausgewertet werden als in den nicht interessierenden Bereichen, was dann nur eine weitere Variante von EP 1 645 838 B1 und EP 1 645 839 B1 ergibt. Alternativ wird in den nicht interessierenden Bereichen beispielsweise nur jede dritte oder zehnte Zeile ausgewertet. Weniger Daten fallen somit nur in den Zeiten an, in denen das gesamte Sichtfeld der Zeilenkamera einheitlich ein nicht interessierender Bereich ist. Zudem wäre das Vorgehen auf eine Matrixkamera gar nicht übertragbar.

Die EP 2 693 363 A1 beschreibt ein Kamerasystem, dass vorab erfasste Geometriedaten ausnutzt, um mehrere Kameras komplementär zu fokussieren. Das basiert auf der redundanten Erfassung der Objekte in mehreren Kameras und ist daher für ein System ungeeignet, in dem möglichst nur eine Kamera die gesamte Breite des zu erfassenden Objektstroms abdeckt. Außerdem wird durch die Redundanz die Gesamtdatenmenge sogar nochmals vervielfacht.

Aus der EP 3 537 339 A2 ist eine Kamera bekannt, in die ein optoelektronischer Abstandssensor nach dem Prinzip des Lichtlaufverfahrens integriert ist. Dessen Daten werden für eine Vielzahl von Funktionen genutzt, wozu auch die Festlegung interessierender Bereiche anhand eines aus den Abstandswerten gewonnenen Höhenprofils zählt. Die interessierenden Bereiche werden jedoch als eine Zusatzinformation behandelt, oder das Bild wird in einem möglichen Verarbeitungsschritt auf einen interessierenden Bereich zugeschnitten. Damit werden die zu verarbeitenden Daten entweder gar nicht oder erst in einem späteren Verarbeitungsschritt reduziert.

Die US 9 237 286 B2 stellt einen Bildsensor vor, der das energieeffiziente Auslesen von Unterbildern erlaubt. Dabei wird einleitend der Begriff interessierender Bereich (ROI) erwähnt, aber die Schrift befasst sich nicht mit der Anwendung, sondern der Erläuterung des Bildsensors auf Hardwareebene.

Die WO2019/092161 A1 offenbart eine Bilderfassung durch einen Bildsensor und einen Entfernungssensor. Anhand einer Tiefenkarte des Entfernungssensors werden interessierende Bereiche identifiziert, um selektiv nur daraus Bildinformationen auszulesen. Dafür kann der Bildsensor entsprechend konfiguriert werden.

Es ist daher Aufgabe der Erfindung, die Erfassung eines bewegten Stroms von Objekten weiter zu verbessern.

Diese Aufgabe wird durch eine Kameravorrichtung und ein Verfahren zur Erfassung eines bewegten Stromes von Objekten nach Anspruch 1 beziehungsweise 15 gelöst. Die Kameravorrichtung nimmt mit einem Bildsensor Bilddaten der dazu relativ bewegten Objekte auf. Der Bildsensor überdeckt vorzugsweise einen großen Teil oder die gesamte Breite, aus einer Draufsicht gedacht, beziehungsweise bei seitlicher Perspektive der Höhe des Stroms sowie eine gewisse Länge in Bewegungsrichtung und weist demzufolge bevorzugt eine Vielzahl von Lichtempfangselementen oder Pixeln in einer Matrixanordnung einer Auflösung von typischerweise mehreren Megapixeln auf. Ein Geometrieerfassungssensor vermisst die Objektgeometrie. Dazu eignet sich insbesondere ein Abstandssensor, der den jeweiligen Abstand zu den Objekten misst. Daraus kann in Kenntnis von Position und Pose des Geometrieerfassungssensors im Verlauf der Relativbewegung eine Höhenkontur in Bewegungsrichtung und vorzugsweise auch quer dazu erzeugt werden.

Eine Steuer- und Auswertungseinheit nutzt die Messdaten des Geometrieerfassungssensors, um mindestens einen interessierenden Bereich beispielsweise mit einem Objekt, einer Objektfläche oder einer sonstigen für die Kameravorrichtung relevanten Struktur zu bestimmen. Die weitere Auswertung der Bilddaten ist dann auf die interessierenden Bereiche begrenzt ("Cropping"). Enthalten die Messdaten eine Intensitäts- oder Farbinformation, so können alternativ oder ergänzend nicht rein geometrische Informationen wie Helligkeiten, Farben oder Kontraste für die Bestimmung der interessierenden Bereiche herangezogen werden. Um interessierende Bereiche in der Ebene des Bildsensors anhand von Geometriedaten zu bestimmen, sind Bildsensor und Geometrieerfassungssensor vorzugsweise zueinander kalibriert, und es findet eine entsprechende Transformation statt.

Die Erfindung geht von dem Grundgedanken aus, die Bilddaten direkt an der Quelle im Bildsensor auf den mindestens einen interessierenden Bereich zu beschränken. Der Bildsensor verfügt über eine Konfigurationseinheit und bietet so eine Konfigurationsmöglichkeit, um nur einen einstellbaren Teil oder Teilbereich der Bilddaten auslesen zu lassen. Die Steuer- und Auswertungseinheit nutzt diese Konfigurationsmöglichkeit, um den auszulesenden Teil der Bilddaten an den mindestens einen interessierenden Bereich anzupassen. Insbesondere werden genau diejenigen Pixel oder Pixelzeilen ausgelesen, die einen interessierenden Bereich bilden. Das stimmt aber nur vorzugsweise pixelgenau überein, Pufferzonen oder abgeschnittene Teilbereiche eines interessierenden Bereichs sind denkbar, ebenso wie eingeschränkte Konfigurationsmöglichkeiten, die den Zugriff auf gewisse Pixelgruppen nur gemeinsam zulässt oder einschränkt. Bilddaten ohne Bezug zu einem interessierenden Bereich müssen gar nicht erst ausgelesen werden.

Die Erfindung hat den Vorteil, dass die Bilddaten von Anfang an auf das Wesentliche reduziert werden. Das hat an vielen Stellen der Bildverarbeitungskette große Vorteile. Es werden Bandbreiten für Datenübertragung, Speicher- und Rechenressourcen sowie Verarbeitungszeit eingespart. Ein Qualitätsverlust ist damit nicht verbunden, denn die nicht interessierenden Bereiche enthalten ohnehin keine für die Anwendung relevante Information. Die einleitend geschilderten Nachteile weniger oder nur einer einzigen Kamera, die die gesamte Breite beziehungsweise Höhe des Stromes der Objekte abdeckt, sind damit überwunden. In Kombination mit einer Fokusverstellung kann sichergestellt werden, dass sämtliche interessierenden Bereiche in mindestens einer Aufnahme scharf abgebildet werden.

Die Steuer- und Auswertungseinheit ist bevorzugt dafür ausgebildet, den mindestens einen interessierenden Bereich und/oder den ausgelesenen Teil der Bilddaten zwischen den Aufnahmen anzupassen. Die Objekte mit den interessierenden Strukturen befinden sich in einer Relativbewegung zu der Kameravorrichtung, so dass sich die Lage der interessierenden Bereiche in der Ebene des Bildsensors ständig ändert. Außerdem verlassen Objekte den Sichtbereich, und neue Objekte treten ein. Dem wird durch die Anpassung Rechnung getragen. Der Bildsensor beziehungsweise dessen Konfigurationseinheit bietet daher vorzugsweise die Möglichkeit einer dynamischen Rekonfiguration vorzugsweise mit kurzer Ansprechzeit unterhalb der Aufnahmeperiode. Die Anpassung kann, muss aber nicht zwingend nach jeder einzelnen Aufnahme erfolgen. Außerdem kann die Steuer- und Auswertungseinheit bei der Anpassung zu dem Schluss kommen, dass die bisherige Konfiguration für die nächste Aufnahme weiterhin angemessen ist, insbesondere indem interessierende Bereiche mit einem gewissen Puffer bestimmt und ausgelesen werden, der für eine kurze Zeitspanne zwischen zwei oder einigen Aufnahmen ausreicht.

Die Steuer- und Auswertungseinheit weist eine Vorverarbeitungseinheit auf, um Bilddaten aus dem Bildsensor auszulesen und vorzuverarbeiten, wobei die Vorverarbeitungseinheit derart ausgelegt ist, dass das Auslesen und Vorverarbeiten der vollständigen Bilddaten einer Aufnahme des Bildsensors eine vollständige Vorverarbeitungszeit benötigen würde, und wobei der Bildsensor mit einer Aufnahmefrequenz betrieben ist, die zwischen zwei Aufnahmen weniger Zeit lässt als die vollständige Vorverarbeitungszeit, insbesondere einer flexiblen Aufnahmefrequenz. Die Vorverarbeitungseinheit umfasst vorzugsweise mindestens ein FPGA (Field Programmable Gate Array), mindestens einen DSP (Digital Signal Processor), mindestens ein ASIC (Application-Specific Integrated Circuit), mindestens eine VPU (Video Processing Unit) oder mindestens einen Neural Processor und leistet Vorverarbeitungsschritte wie eine Entzerrung, eine Helligkeitsanpassung, eine Binarisierung, eine Segmentierung, das Auffinden von Codebereichen und dergleichen. Für das Auslesen und Vorverarbeiten eines vollständigen Bildes des Bildsensors würde die Vorverarbeitungseinheit eine vollständige Verarbeitungszeit benötigen, für die rein zum Verständnis 25 ms ein Zahlenbeispiel ist. Das wird im Konjunktiv ausgedrückt, weil ja erfindungsgemäß die vollständigen Bilddaten nicht ausgelesen werden. Trotzdem beschreibt das die Hardwareressourcen der Vorverarbeitungseinheit, wie Bandbreite der Datenübertragung, Rechenkapazität oder Speicherkapazität.

Die Aufnahmeperiode des Bildsensors wird vorzugsweise kürzer gesetzt als die vollständige Vorverarbeitungszeit. Mit anderen Worten ist die Aufnahmefrequenz so hoch, dass die Vorverarbeitungseinheit mit den vollständigen Bilddaten nicht mehr umgehen könnte. Im Beispiel einer vollständigen Vorverarbeitungszeit von 25 ms wäre die höchstens noch verkraftete Aufnahmefrequenz 40 Hz, aber der Bildsensor wird mit einer höheren Frequenz von beispielsweise 50-100 Hz oder mehr betrieben. Der Vorverarbeitung können weitere Bildbearbeitungsschritte wie ein Codelesen folgen, die selbst im Falle einer Pipelinestruktur für sich noch mehr Zeit beanspruchen. Das erhöht noch den Vorteil des spezifischen Auslesens nur von Bilddaten, die mit interessierenden Bereichen verknüpft sind. Die Aufnahmefrequenz kann flexibel sein. Sobald die konfigurierten Teile der Bilddaten ausgelesen sind, kann das nächste Bild aufgenommen werden, und die dafür erforderliche Zeit hängt mit der Größe der aktuell bestimmten interessierenden Bereiche zusammen. Eine flexible Aufnahmefrequenz bleibt dabei höher als diejenige Aufnahmefrequenz, die der vollständigen Vorverarbeitungszeit entsprechen würde.

Die Konfigurationseinheit ist vorzugsweise für eine Auswahl von Bildzeilen ausgebildet. Dadurch sind die ausgelesenen Bilddaten nicht ganz passgenau zu interessierenden Bereichen, die nur einen Teil der Breite der Zeilen ausnutzen. Dafür ist die Hardware des Bildsensors und dessen Ansteuerung zum Auslesen vereinfacht. Die Bearbeitungszeit in der gesamten Bildverarbeitungskette ab dem Auslesen reduziert sich linear mit den nicht ausgewählten Bildzeilen. Dabei wird ohne Beschränkung der Allgemeinheit angenommen, dass der Bildsensor mit seiner Zeilenrichtung quer zur Förderrichtung angeordnet ist. Eine Alternative, in der die Spalten die Rolle von Zeilen einnehmen und umgekehrt, wäre ebenso denkbar, dies soll sprachlich nicht mehr eigens unterschieden werden.

Die Konfigurationseinheit ist bevorzugt für die Auswahl eines rechteckigen Teilbereichs ausgebildet. Damit können nicht nur ganze Zeilen ausgeschlossen werden, sondern auch in Zeilenrichtung ist ein Zurechtschneiden auf die interessierenden Bereiche schon direkt an der Quelle in dem Bildsensor möglich. Die Hardwarestruktur und Ansteuerung des Bildsensors wird etwas aufwändiger, dafür sind die ausgelesenen und zu verarbeitenden Bilddaten noch passgenauer reduziert.

Die Steuer- und Auswertungseinheit ist bevorzugt dafür ausgebildet, nur den Teil der Bilddaten aus dem Bildsensor auszulesen, die anhand eines interessierenden Bereiches innerhalb eines Tiefenschärfenbereichs des Bildsensors aufgenommen sind. Nur mit scharf aufgenommenen Bilddaten bestehen gute Aussichten, dass die weitere Bildverarbeitungskette ihre Funktionen erfüllen wird. Es kann mindestens einen weiteren interessierenden Bereich geben, der außerhalb des Tiefenschärfenbereichs liegt und dessen Bilddaten gar nicht erst ausgelesen werden. Hier würde voraussichtlich durch weitere Verarbeitungsschritte, insbesondere den Versuch des Decodierens von Codes, nur Zeit verlorengehen, ohne zu dem gewünschten Ergebnis zu gelangen. Vorzugsweise sorgt eine Fokusverstellung dafür, dass sich ein interessierender Bereich im Tiefenschärfenbereich befindet. Das allein löst aber das Problem noch nicht, da sich mehrere Objekte im Sichtbereich befinden können, deren Höhenunterschied Teile des Sichtfeldes außerhalb jedes Tiefenschärfenbereichs zwingen. Dann resultiert trotz der Fokusverstellung ein unscharf aufgenommener interessierender Bereich.

Die Steuer- und Auswertungseinheit ist bevorzugt dafür ausgebildet, für einen interessierenden Bereich außerhalb des Tiefenschärfenbereichs einen passenden Tiefenschärfenbereich zu bestimmen und für eine folgende Aufnahme auf den passenden Tiefenschärfenbereich zu refokussieren. Müssen also die Bilddaten eines interessierenden Bereichs ignoriert beziehungsweise gar nicht erst ausgelesen werden, weil sie unscharf wären, so besteht die Möglichkeit einer raschen Kompensation. Dafür wird mit einer der folgenden Aufnahmen, vorzugsweise der direkt nachfolgenden Aufnahme, nach einer Refokussierung ein zuvor ignorierter interessierender Bereich nun im Tiefenschärfenbereich erneut aufgenommen und dann auch ausgelesen. Sollten selbst zwei unterschiedliche Tiefenschärfenbereiche noch nicht ausreichen, um alle interessierenden Bereiche scharf aufzunehmen, so kann das Vorgehen iteriert werden. Dank der reduzierten Bilddaten durch gezieltes Auslesen nur interessierender Bereiche, insbesondere sogar nur scharf aufgenommener interessierender Bereiche, ist eine viel höhere Aufnahmefrequenz möglich. Die weitere Aufnahme erfolgt daher rechtzeitig bei kaum veränderter Szenerie, jedenfalls ehe das Objekt den Sichtbereich verlassen hat. Aufgrund der Messdaten des Geometrieerfassungssensors kann die Abfolge der Fokuslagen im Übrigen rechtzeitig geplant werden, um jeden interessierenden Bereich ausreichend oft scharf aufzunehmen. Ist beispielsweise noch genug Zeit, wie im Falle von zwei Objekten unterschiedlicher Höhe, die nicht ganz dicht aufeinanderfolgen, so wäre noch mindestens eine weitere Aufnahme in der gegenwärtigen Fokuslage denkbar, ehe dann für das andere Objekt und einen darauf bezogenen interessierenden Bereich die Fokuslage umgestellt wird.

Die Steuer- und Auswertungseinheit ist bevorzugt dafür ausgebildet, den mindestens einen interessierenden Bereich anhand eines Tiefenschärfenbereichs des Bildsensors zu bestimmen. Das ist in gewisser Weise eine Umkehrung des zuletzt erläuterten Vorgehens. Es wird nicht unter nach sonstigen Kriterien gefundenen interessierenden Bereichen anhand der Fokuslage gewählt, sondern die Fokuslage definiert selbst die interessierenden Bereiche auf eine sehr einfache Weise. Alles, was scharf genug aufgenommen werden konnte, wird ausgelesen, so dass verwertbare Bilddaten keinesfalls zu früh verworfen werden. Eine mögliche spezifischere Bestimmung interessierender Bereiche nach komplexeren Kriterien wie Kanten, Kontrasten oder Objektflächen erfolgt dann erst nachgelagert. Wenn vorzugsweise der Tiefenschärfenbereich noch variiert wird, wie bei einer schwingenden Fokuslage, so ist stets gewährleistet, dass jede Struktur in kurzen Zyklen mindestens einmal scharf aufgenommen und ausgelesen wurde.

Die Steuer- und Auswertungseinheit ist bevorzugt dafür ausgebildet, in den Bilddaten Codebereiche zu identifizieren und deren Codeinhalt auszulesen. Damit wird die Kameravorrichtung zu einem kamerabasierten Codeleser für Barcodes und/oder 2D-Codes nach diversen Standards, gegebenenfalls auch für eine Texterkennung (OCR, Optical Character Reading). Bei Codeleseanwendungen ist besonders wichtig, dass sämtliche Codebereiche scharf genug aufgenommen werden. Zugleich nehmen die Codebereiche nur einen kleinen Teil der Gesamtfläche ein. Eine frühzeitige Beschneidung der Bilddaten auf Codebereiche oder wenigstens die potentiell codetragenden Objekte ist daher besonders wirkungsvoll.

Der Geometrieerfassungssensor ist bevorzugt als Abstandssensor, insbesondere als optoelektronischer Abstandssensor nach dem Prinzip des Lichtlaufzeitverfahrens ausgebildet. Der Abstandssensor misst den Abstand der Objekte zunächst zu dem Geometriesensor, was sich aber in Kenntnis der Position und Pose des Abstandssensors in eine Höhe des Objekts beispielsweise über einem Förderband umrechnen lässt. Somit resultiert eine Höhenkontur zumindest in Bewegungsrichtung. Sofern der Abstandssensor ortsauflösend ist, wird auch quer zu der Bewegungsrichtung eine Höhenkontur erfasst. Der Begriff Höhenkontur lehnt sich an eine Draufsicht des Bildsensors an, aus anderer Perspektive wird sinngemäß eine entsprechende Kontur erfasst. Zur Abstandsmessung in einem Kamerasystem eignet sich ein optisches Prinzip, insbesondere ein Lichtlaufzeitverfahren.

Der Geometrieerfassungssensor ist bevorzugt mit dem Bildsensor in eine Kamera integriert. Das ergibt ein besonders kompaktes System, und die Messdaten des Geometrieerfassungssensors sind unmittelbar aus einer zu den Bilddaten vergleichbaren Perspektive erfasst. Alternativ ist der Geometrieerfassungssensor extern und dem Bildsensor entgegen dem Strom vorgelagert angeordnet, um die Objekte vor der Aufnahme der Bilddaten zu vermessen. Dabei handelt es sich beispielsweise um einen entfernungsmessenden Laserscanner.

Die Kameravorrichtung weist bevorzugt einen Geschwindigkeitssensor für eine Bestimmung der Geschwindigkeit des Stromes auf. Das ist beispielsweise ein Encoder an einem Förderband. Vorzugsweise ist die Steuer- und Auswertungseinheit dafür ausgebildet, anhand der Messdaten des Geometrieerfassungssensors und/oder der Bilddaten die Geschwindigkeit des Stromes zu bestimmen. Dazu wird beispielsweise eine bestimmte Struktur, wie eine Objektkante, über die Zeit verfolgt. Der Verschiebevektor kann auf die Zeitdifferenz bezogen werden, um die Geschwindigkeit zu schätzen. Der optische Fluss lässt sich durch zusätzliche Korrelationen bis hin zur gesamten Höhenkontur beziehungsweise ganzer Bildbereiche genauer bestimmen. Dann ist ein zusätzlicher Geschwindigkeitssensor nicht erforderlich oder wird ergänzt. Mit der Geschwindigkeitsinformation sind Positionen in Bewegungsrichtung des Stromes umrechenbar, insbesondere können Messdaten eines vorgelagerten Geometrieerfassungssensors auf die Position des Bildsensors bezogen werden

Die Kameravorrichtung ist bevorzugt stationär an einer Fördereinrichtung montiert, die die Objekte in einer Förderrichtung fördert. Dies ist eine sehr häufige industrielle Anwendung einer Kamera. Rahmendaten des Stromes der Objekte sind bekannt und vereinfachen die Bildverarbeitung, wie die Förderrichtung und zumindest in einem erwartbaren Intervall auch die Geschwindigkeit und oft auch die Art und grobe Geometrie der zu erfassenden Objekte.

Die Kameravorrichtung weist bevorzugt mindestens einen Bildsensor für eine Aufnahme des Stromes von oben und/oder mindestens einen Bildsensor für eine Aufnahme des Stromes von der Seite auf. Die Erfassung von oben ist in dieser Beschreibung oft die leitende Vorstellung, aber es besteht eine vergleichbare Situation auch bei einer Erfassung von der Seite, wo der Objektabstand nun nicht aufgrund der Objekthöhe, sondern der lateralen Positionierung der Objekte variiert. Beschreibungen, die sich auf die Perspektive von oben beziehen, sind daher überall sinngemäß auf eine andere Perspektive zu lesen. Besonders bevorzugt werden Objekte mit mehreren Bildsensoren aus mehreren Perspektiven erfasst, insbesondere beim Codelesen, wo nicht immer garantiert werden kann, dass der Code sich auf der Oberseite oder überhaupt einer bestimmten Seite befindet. Hier werden manchmal die Begriffe Top-Lesung, Seitenlesung und Bottom-Lesung verwendet. Letzteres allerdings verursacht hinsichtlich des Tiefenschärfenbereichs keine Probleme. Stattdessen muss beispielsweise ein Fenster oder eine Lücke im Förderband geschaffen werden, um die Objekte überhaupt wahrnehmen zu können. Die Perspektiven sind im Übrigen häufig Mischformen, d.h. keine direkte Draufsicht oder Seitensicht, sondern mit einer schrägen Komponente, wie seitlich-frontal, seitlich-rückwärtig, vorne-oben oder hinten-oben. Je Perspektive ist vorzugsweise nur ein Bildsensor vorgesehen, der entsprechend die Höhe oder Breite des Objektstroms allein abdeckt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung einer Kamera mit einem integrierten Abstandssensor;
- Fig. 2: eine dreidimensionale Ansicht einer beispielhaften Anwendung der Kamera in Montage an einem Förderband;
- Fig. 3: eine dreidimensionale Ansicht einer alternativen Ausführungsform mit Montage einer Kamera und eines externen Abstandssensors an einem Förderband;
- Fig. 4: eine schematische Schnittdarstellung von Sichtbereichen des Abstandssensors und der Kamera;
- Fig. 5: eine schematische Darstellung eines Bildsensors mit zum Auslesen konfigurierten Bildzeilen entsprechend einem interessierenden Bereich;
- Fig. 6: eine schematische Darstellung ähnlich Figur 5 mit zusätzlicher Konfiguration auszulesender Pixel auch innerhalb von Bildzeilen;
- Fig. 7: eine schematische Schnittdarstellung der Erfassung zweier Objekte bei begrenztem Tiefenschärfenbereich;
- Fig. 8: eine schematische Darstellung eines Bildsensors mit einem zum Auslesen konfigurierten Teilbereich entsprechend einem interessierenden Bereich im Tiefenschärfenbereich gemäß Figur 7;
- Fig. 9: eine schematische Schnittdarstellung der Erfassung zweier Objekte bei gegenüber Figur 7 verändertem Tiefenschärfenbereich; und
- Fig. 10: eine schematische Darstellung ähnlich Figur 8, nun jedoch mit konfiguriertem Teilbereich entsprechend dem in Figur 9 im Tiefenschärfenbereich liegenden interessierenden Bereichs.

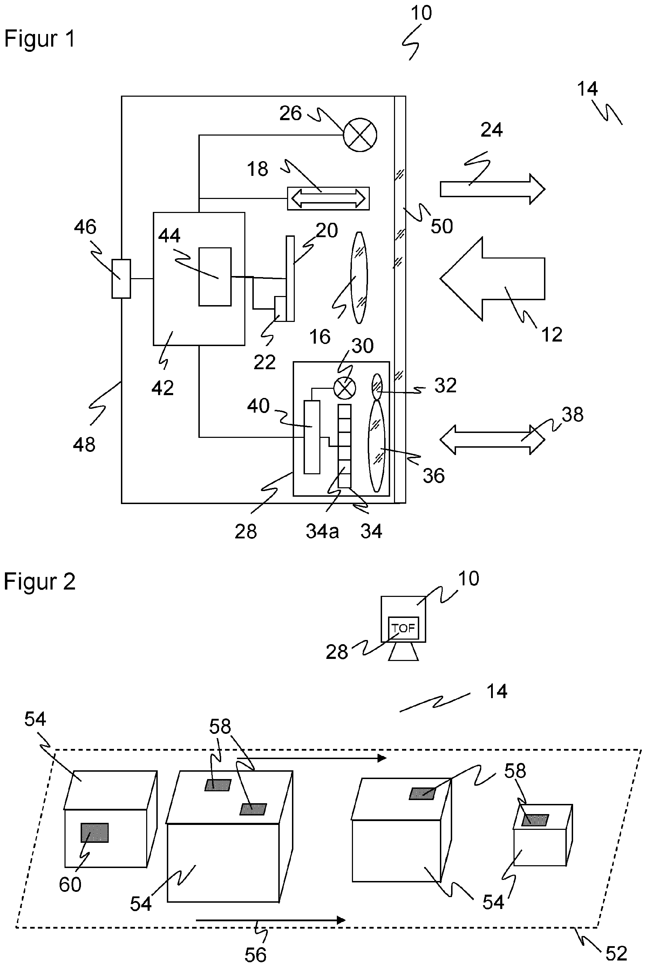

Figur 1 zeigt eine schematische Schnittdarstellung einer Kamera 10. Empfangslicht 12 aus einem Erfassungsbereich 14 trifft auf eine Empfangsoptik 16 mit einer Fokusverstellung 18, die das Empfangslicht 12 auf einen Bildsensor 20 führt. Die optischen Elemente der Empfangsoptik 16 sind vorzugsweise als Objektiv aus mehreren Linsen und anderen optischen Elementen wie Blenden, Prismen und dergleichen ausgestaltet, hier aber vereinfachend nur durch eine Linse repräsentiert. Die Fokusverstellung 18 ist nur rein schematisch dargestellt und kann beispielsweise durch mechanisches Bewegen von Elementen der Empfangsoptik 16 oder des Bildsensors 20, einen bewegten Umlenkspiegel oder eine Flüssiglinse umgesetzt sein. Eine Aktorik basiert beispielsweise auf einem Motor, einer Tauchspule oder einem Piezoelement. Der Bildsensor 20 weist vorzugsweise eine Matrixanordnung von Pixelelementen mit einer hohen Auflösung in der Größenordnung von Megapixel auf, beispielsweise zwölf Megapixel. Eine Konfigurationseinheit 22 ermöglicht eine Konfiguration der Ausleselogik des Bildsensors 20 und damit eine dynamisch einstellbare Auswahl von Pixelzeilen oder Pixelbereichen, die aus dem Bildsensor 20 ausgelesen werden.

Um den Erfassungsbereich 14 während einer Aufnahme der Kamera 10 mit Sendelicht 24 auszuleuchten, umfasst die Kamera 10 eine optionale Beleuchtungseinheit 26, die in Figur 1 in Form einer einfachen Lichtquelle und ohne Sendeoptik dargestellt ist. In anderen Ausführungsformen sind mehrere Lichtquellen, wie LEDs oder Laserdioden, beispielsweise ringförmig um den Empfangspfad angeordnet, die auch mehrfarbig und gruppenweise oder einzeln ansteuerbar sein können, um Parameter der Beleuchtungseinheit 26 wie deren Farbe, Intensität und Richtung anzupassen.

Zusätzlich zu dem eigentlichen Bildsensor 20 zur Erfassung von Bilddaten weist die Kamera 10 einen optoelektronischen Abstandssensor 28 auf, der mit einem Lichtlaufzeitverfahren (ToF, Time of Flight) Abstände zu Objekten in dem Erfassungsbereich 14 misst. Der Abstandssensor 28 umfasst einen TOF-Lichtsender 30 mit TOF-Sendeoptik 32 sowie einen TOF-Lichtempfänger 34 mit TOF-Empfangsoptik 36. Damit wird ein TOF-Lichtsignal 38 ausgesandt und wieder empfangen. Eine Lichtlaufzeitmesseinheit 40 bestimmt die Laufzeit des TOF-Lichtsignals 38 und daraus den Abstand zu einem Objekt, an dem das TOF-Lichtsignal 38 zurückgeworfen wurde.

Der TOF-Lichtempfänger 34 weist vorzugsweise mehrere Lichtempfangselemente 34a oder Pixel auf und ist dann ortsaufgelöst. Es wird so nicht nur ein einzelner Abstandswert erfasst, sondern ein ortsaufgelöstes Höhenprofil (Tiefenkarte, 3D-Bild). Dabei ist bevorzugt nur eine relativ geringe Anzahl von Lichtempfangselementen 34a und damit eine kleine laterale Auflösung des Höhenprofils vorgesehen. Es können bereits 2x2 Pixel oder sogar nur 1x2 Pixel ausreichen. Ein höher lateral aufgelöstes Höhenprofil mit nxm Pixeln, n,m > 2 lässt selbstverständlich komplexere und genauere Auswertungen zu. Die Pixelanzahl des TOF-Lichtempfängers 34 bleibt aber vergleichsweise gering mit beispielsweise einigen zehn, hundert oder tausend Pixeln beziehungsweise n,m ≤ 10, n,m ≤ 20, n,m ≤ 50 oder n,m ≤ 100, weit entfernt von üblichen Megapixelauflösungen des Bildsensors 20.

Aufbau und Technologie des Abstandssensors 28 sind rein beispielhaft. In der weiteren Beschreibung wird der Abstandssensor 28 als gekapseltes Modul zur Geometrievermessung behandelt, das beispielsweise zyklisch, bei Erfassen eines Objekts oder auf Anfrage Messdaten wie einen Abstandswert oder ein Höhenprofil bereitstellt. Dabei sind weitere Messdaten vorstellbar, insbesondere eine Messung der Intensität. Die optoelektronische Entfernungsmessung mittels Lichtlaufzeitverfahren ist bekannt und wird daher nicht im Einzelnen erläutert. Zwei beispielhafte Messverfahren sind Photomischdetektion mit einem periodisch modulierten TOF-Lichtsignal 38 und Pulslaufzeitmessung mit einem pulsmodulierten TOF-Lichtsignal 38. Dabei gibt es auch hochintegrierte Lösungen, in denen der TOF-Lichtempfänger 34 mit der Lichtlaufzeitmesseinheit 40 oder zumindest Teilen davon, etwa TDCs (Time-to-Digital-Converter) für Laufzeitmessungen, auf einem gemeinsamen Chip untergebracht ist. Dazu eignet sich insbesondere ein TOF-Lichtempfänger 34, der als Matrix von SPAD-Lichtempfangselementen 34a aufgebaut ist (Single-Photon Avalanche Diode). Die TOF-Optiken 32, 36 sind nur symbolhaft als jeweilige Einzellinsen stellvertretend für beliebige Optiken wie beispielsweise ein Mikrolinsenfeld gezeigt.

Eine Steuer- und Auswertungseinheit 42 ist mit der Fokusverstellung 18, dem Bildsensor 20 und dessen Konfigurationseinheit 22, der Beleuchtungseinheit 26 sowie dem Abstandssensor 28 verbunden und für die Steuerungs-, Auswertungs- und sonstigen Koordinierungsaufgaben in der Kamera 10 zuständig. Sie bestimmt anhand der Messdaten des Abstandssensors 28 interessierende Bereiche und konfiguriert entsprechend den interessierenden Bereichen den Bildsensor 20 über dessen Konfigurationseinheit 22. Sie liest Bilddaten der so konfigurierten Teilbereiche aus dem Bildsensor 20 aus und unterzieht sie weiteren Bildverarbeitungsschritten. Vorzugsweise ist die Steuer- und Auswertungseinheit 42 in der Lage, Codebereiche in den Bilddaten aufzufinden und zu decodieren, womit die Kamera 10 zu einem kamerabasierten Codeleser wird.

Das Auslesen und erste vorverarbeitende Schritte, wie ein Entzerren, Segmentieren, Binarisieren und dergleichen, erfolgt vorzugsweise in einer Vorverarbeitungseinheit 44, die beispielsweise mindestens ein FPGA umfasst (Field Programmable Gate Array). Alternativ werden die vorzugsweise zumindest vorverarbeiteten Bilddaten über eine Schnittstelle 46 ausgegeben, und die weiteren Bildverarbeitungsschritte erfolgen in einer übergeordneten Steuer- und Auswertungseinheit, wobei praktisch beliebige Arbeitsverteilungen vorstellbar sind. Anhand der Messdaten des Abstandssensors 28 können weitere Funktionen gesteuert werden, insbesondere eine gewünschte Fokuslage für die Fokusverstellung 18 oder ein Auslösezeitpunkt für die Bildaufnahme abgeleitet werden.

Die Kamera 10 wird durch ein Gehäuse 48 geschützt, das im vorderen Bereich, wo das Empfangslicht 12 einfällt, durch eine Frontscheibe 50 abgeschlossen ist.

Figur 2 zeigt eine mögliche Anwendung der Kamera 10 in Montage an einem Förderband 52. Die Kamera 10 wird hier und im Folgenden nur noch als Symbol und nicht mehr mit ihrem bereits anhand der Figur 1 erläuterten Aufbau gezeigt, lediglich der Abstandssensor 28 wird noch als Funktionsblock dargestellt. Das Förderband 52 fördert Objekte 54, wie durch den Pfeil 56 angedeutet, durch den Erfassungsbereich 14 der Kamera 10. Die Objekte 54 können an ihren Außenflächen Codebereiche 58 tragen. Aufgabe der Kamera 10 ist, Eigenschaften der Objekte 54 zu erfassen und in einem bevorzugten Einsatz als Codeleser die Codebereiche 58 zu erkennen, die dort angebrachten Codes auszulesen, zu dekodieren und dem jeweils zugehörigen Objekt 54 zuzuordnen.

Das Sichtfeld der Kamera 10 überdeckt vorzugsweise den Strom der Objekte 54 in voller Breite sowie über eine gewisse Länge. Alternativ werden zusätzliche Kameras 10 eingesetzt, die einander mit ihren Sichtbereichen ergänzen, um die volle Breite zu erreichen. Dabei ist vorzugsweise allenfalls ein kleiner Überlapp vorgesehen. Die dargestellte Perspektive von oben ist in vielen Fällen besonders geeignet. Alternativ, oder um die Objektseiten und insbesondere seitlich angebrachte Codebereiche 60 besser zu erfassen, werden vorzugsweise zusätzliche, nicht dargestellte Kameras 10 aus unterschiedlicher Perspektive eingesetzt. Dabei sind seitliche, aber auch Mischperspektiven schräg von oben oder von der Seite möglich.

An dem Förderband 52 kann ein nicht dargestellter Encoder zur Bestimmung des Vorschubs beziehungsweise der Geschwindigkeit vorgesehen sein. Alternativ bewegt sich das Förderband zuverlässig mit einem bekannten Bewegungsprofil, entsprechende Informationen werden von einer übergeordneten Steuerung übergeben, oder die Steuer- und Auswertungseinheit bestimmt sich die Geschwindigkeit selbst durch Verfolgen bestimmter geometrischer Strukturen oder Bildmerkmale. Mit der Geschwindigkeitsinformation können zu verschiedenen Zeitpunkten und in verschiedenen Förderpositionen aufgenommene Geometrieinformationen beziehungsweise Bilddaten in Förderrichtung zusammengesetzt und einander zugeordnet werden. Insbesondere erfolgt so vorzugsweise auch eine Zuordnung zwischen gelesenen Codeinformationen und den zugehörigen Code 58, 60 tragendem Objekt 54.

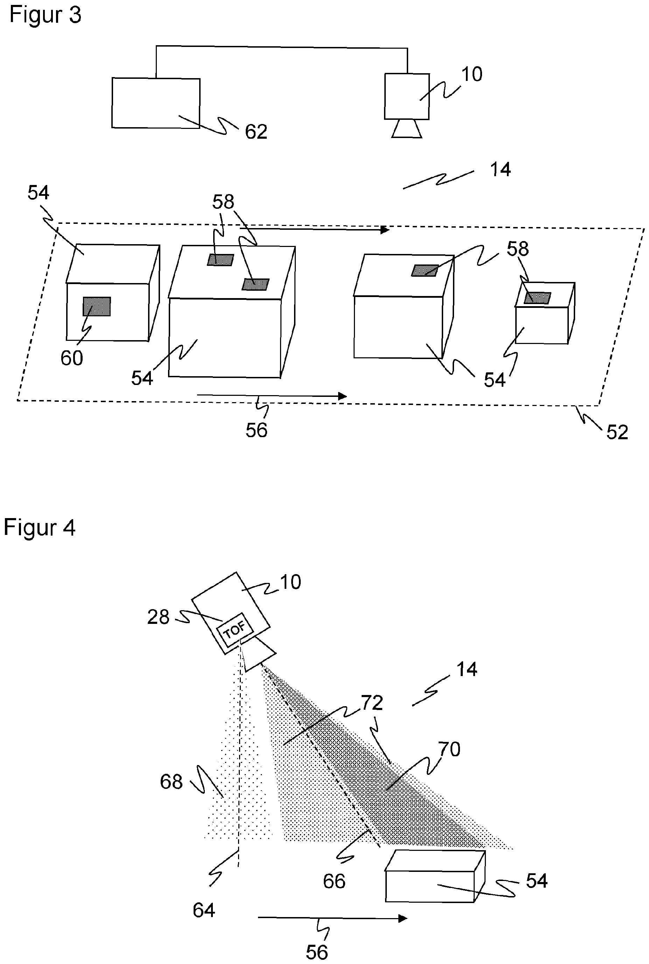

Figur 3 zeigt eine dreidimensionale Ansicht einer alternativen Ausführungsform einer Vorrichtung mit der Kamera 10 an einem Förderband 52. Statt eines internen Abstandssensors 28, oder in Ergänzung dazu, ist hier ein gegen die Förderrichtung vorgelagerter externer Geometrieerfassungssensor 62 vorgesehen, beispielsweise ein Laserscanner. Wie soeben erläutert, sind auf Basis einer Geschwindigkeitsinformation die Messdaten des Geometrieerfassungssensors 62 auf die Position der Kamera 10 umrechenbar. Die nun folgende Beschreibung anhand eines internen Abstandssensors 28 ist daher auf die Situation mit einem externen Geometrieerfassungssensor 62 übertragbar, ohne diesen noch eigens zu erwähnen.

Figur 4 zeigt eine schematische Schnittansicht der Kamera 10 über einem Objektstrom, der hier nur von einem einzigen Objekt 54 repräsentiert ist. Die optische Achse 64 des Abstandssensors 28 steht in einem Winkel zu der optischen Achse 66 der Kamera 10. Das Sichtfeld 68 des Abstandssensors 28 ist deshalb dem Sichtfeld oder Erfassungsbereich 14 der Kamera 10 vorgelagert. Somit nimmt der Abstandssensor 28 die Objekte 54 etwas früher wahr, und dessen Messdaten sind bei der Aufnahme schon verfügbar.

Um die zu verarbeitenden Bilddaten von Anfang an zu reduzieren, unterteilt die Steuer- und Auswertungseinheit 42 ihren Erfassungsbereich 14 und korrespondierend dazu Bereiche des Bildsensors 20 anhand der Messdaten des Abstandssensors 28 in relevante und nicht relevante Teile. Ein relevanter Teil entspricht einem interessierenden Bereich (ROI, region of interest). In Figur 4 sind dazu unterschiedlich schattierte Teilsichtfelder 70, 72 gezeigt, ein dunkleres relevantes Teilsichtfeld 70 mit dem Objekt 54 und ein in sich nochmals zweiteiliges helleres nicht relevantes Teilsichtfeld 72 ohne Objekt 54.

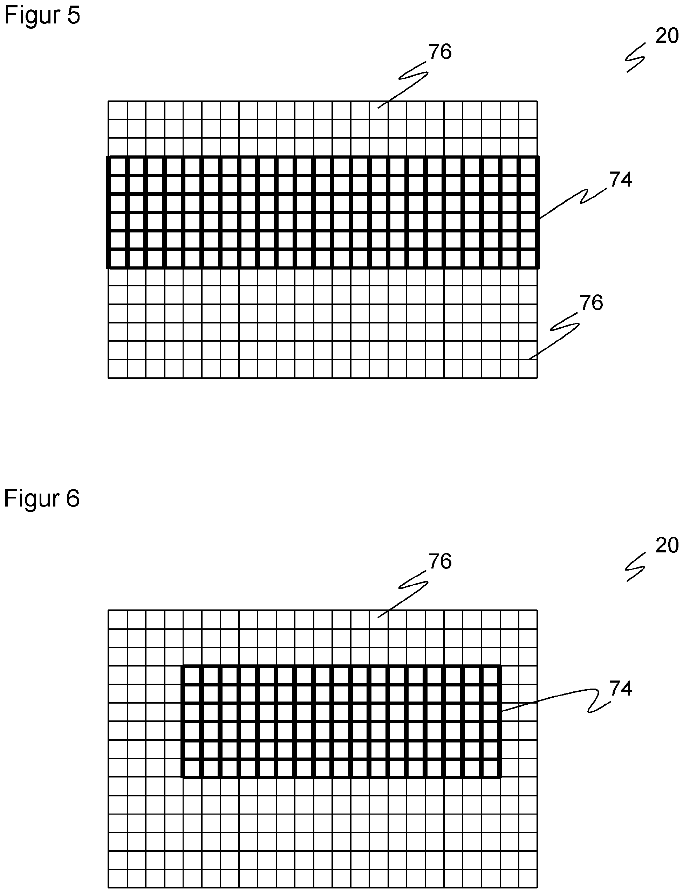

Figur 5 zeigt die zugehörige Unterteilung in einer schematischen Draufsicht auf den Bildsensor 20. Die Pixel in den dick umrahmten Zeilen des interessierenden Bereichs 74 entsprechen dem relevanten Teilsichtfeld 70, die übrigen Pixel nicht interessierender Bereiche 76 dem nicht relevanten Teilsichtfeld 72. Die zu dem interessierenden Bereich 74 gehörigen Zeilen werden von der Steuer- und Auswertungseinheit 42 über die Konfigurationseinheit 22 ausgewählt, und nur die Bilddaten dieser Pixel werden ausgelesen und weiterverarbeitet.

Eine beispielhafte Auswertung, mit der die Pixel des interessierenden Bereichs 74 aus den Messdaten des Abstandssensors 28 aufgefunden werden, wird wiederum unter Bezugnahme auf die Figur 4 erläutert. Der Abstandssensor 28 erfasst zu einem Zeitpunkt t erstmals das Objekt 54 mit Höhe h. Es wird anhand der relativen Lage und Pose des Abstandssensors 28 zu dem Bildsensor 20 sowie der Fördergeschwindigkeit ein Auslösezeitpunkt t1 bestimmt, zu dem sich das Objekt 54 in den Erfassungsbereich 14 bewegt haben wird. Bis zu dem Zeitpunkt t1 wird aus den Messdaten des Abstandssensors 28 die Länge des Objekts 54 bestimmt. Beispielsweise wird der Abstandssensor 28 mit einer Wiederholungsrate f betrieben. Die Länge des Objekts 54 entspricht der Anzahl Erfassungen mit dieser Wiederholungsrate. Es sei daran erinnert, dass über die Fördergeschwindigkeit Positionen und Längen in Förderrichtung direkt in Zeiten umgerechnet werden können. Somit lässt sich in Kenntnis der jeweiligen Positionen und Posen von Kamera 10 und Abstandssensor 28 beziehungsweise externem Geometrieerfassungssensor 62 die mittels Abstandssensor 28 bestimmte Objektlänge unter Beachtung der Objekthöhe trigonometrisch in zugehörige Bildzeilen auf dem Bildsensor 20 überführen.

Im Laufe der Förderbewegung verschiebt sich der relevante Teilbereich 70 gemäß Figur 4 gegen die Förderrichtung beziehungsweise der interessierende Bereich 74 auf dem Bildsensor 20 in Figur 5 nach unten. Eine erste Bildauslösung kann zeitlich so abgestimmt werden, dass die Vorderkante des Objekts 54 an dem Rand des Erfassungsbereichs 14 und somit in der obersten Zeile des Bildsensors 20 liegt. Der Bildsensor 20 kann wiederholt dynamisch rekonfiguriert werden, um das Objekt 54 oder eine sonstige interessierende Struktur, wie einen Codebereich 58, 60 auf dem Objekt, mehrfach aufzunehmen.

Figur 6 zeigt eine alternative Unterteilung der Pixel des Bildsensors 20 in auszulesende und nicht auszulesende Bereiche. Im Gegensatz zu Figur 5 entfällt hier die Randbedingung, dass der interessierende Bereich 74 nur ganze Zeilen umfassen darf. Dadurch werden die auszulesenden und zu verarbeitenden Bilddaten noch weiter reduziert. Die Konfigurationseinheit 22 ist dementsprechend flexibler und erlaubt auch den Ausschluss von Pixeln innerhalb der Zeilen. Das bedeutet vorzugsweise immer noch keine individuelle Pixelwahl, die einen zu hohen Schaltungsaufwand nach sich ziehen würde, jedoch die Auswahlmöglichkeit rechteckiger Teilbereiche wie dargestellt. Um eine sinnvolle Auswahl von Pixeln innerhalb der Zeile und damit quer zum Strom der Objekte 54 treffen zu können, sollte der Abstandssensor 28 vorzugsweise eine laterale Auflösung bieten, so dass sukzessive eine in Förderrichtung und quer dazu aufgelöste Kontur der Objekte 54 zur Verfügung steht.

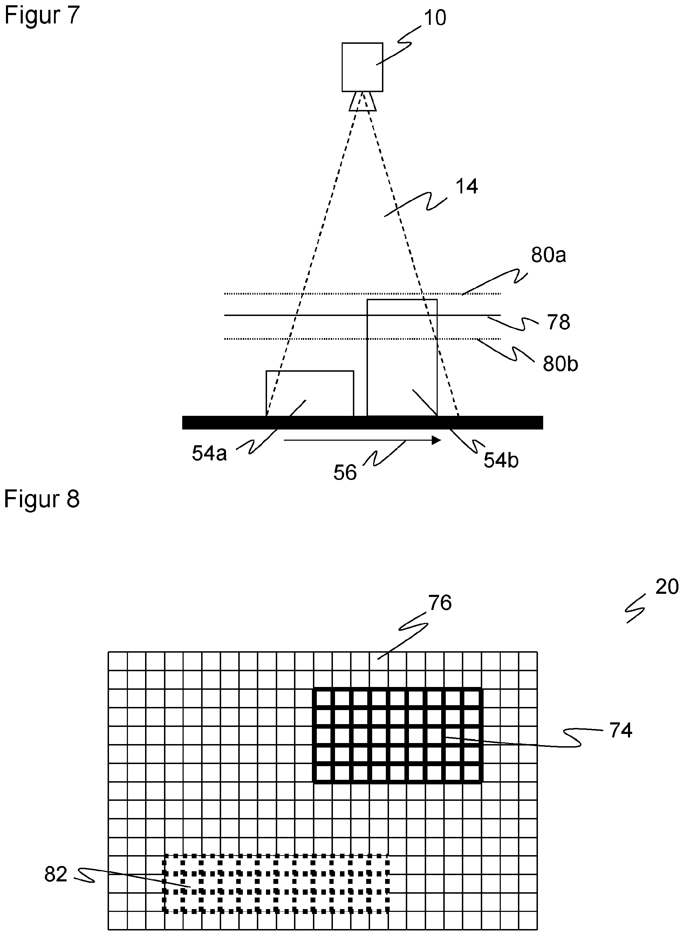

Figur 7 zeigt in einer schematischen Schnittdarstellung eine Situation, in der sich zwei Objekte 54a-b unterschiedlicher Höhe im Erfassungsbereich 14 befinden. Durch Einstellen der Fokuslage 78 mittels der Fokusverstellung 18 lässt sich ein durch eine obere und untere DOF-Grenze 80a-b (DOF, Depth of Field) eingeschlossener Tiefenschärfenbereich verschieben. Der Tiefenschärfenbereich in der jeweiligen Fokuslage 78 hängt von verschiedenen Faktoren ab, insbesondere der Empfangsoptik 16, aber auch beispielsweise dem Decodierverfahren, denn maßgeblich für ausreichende Bildschärfe beim Codelesen ist, ob der Code lesbar ist. Die Steuer- und Auswertungseinheit 42 kann beispielsweise auf eine Nachschlagtabelle mit vorab durch Simulation, Modellierung oder empirisch bestimmten Tiefenschärfenbereichen zugreifen.

Somit ist der Steuer- und Auswertungseinheit 42 aufgrund der Messdaten des Abstandssensors 28 und der Informationen über den Tiefenschärfenbereich bei einer Fokuslage 78 bekannt, wie die Fokuslage 78 verändert werden muss, um eines der Objekte 54a-b scharf aufzunehmen. Solange es eine Fokuslage 78 mit Tiefenschärfenbereich passend für alle Objekte 54a-b gibt, kann für zwei oder mehr Objekte 54 mittels der Konfigurationseinheit 22 die Anzahl auszulesender Zeilen vergrößert oder ein weiterer auszulesender interessierender Bereich 74 auf dem Bildsensor 20 geschaffen werden. Dann genügt womöglich eine einzige Aufnahme für mehrere Objekte 54a-b, wobei eine wiederholte Aufnahme möglich bleibt, ebenso wie getrennte Aufnahmen für jedes Objekt 54a-b.

In der Situation der Figur 7 jedoch ist die Höhe der Objekte 54a-b zu unterschiedlich, es gibt keine Fokuslage 78, bei der beide Objekte 54a-b innerhalb des Tiefenschärfenbereichs liegen würden. Die Steuer- und Auswertungseinheit 42 muss sich entscheiden und stellt zunächst auf das höhere Objekt 54b scharf.

Figur 8 zeigt eine schematische Draufsicht auf den für diese Situation mittels der Konfigurationseinheit 22 eingestellten Bildsensor 20. Ausgelesen wird nur der interessierende Bereich 74 entsprechend dem höheren, scharf aufgenommenen Objekt 54b. Alternativ zu einem rechteckigen Teilbereich könnten die gesamten nach rechts und links erweiterten Bildzeilen konfiguriert und ausgelesen werden. An sich gibt es einen weiteren interessierenden Bereich 82 entsprechend dem niedrigeren Objekt 54a, und dies ist der Steuer- und Auswertungseinheit 42 durch Auswertung der Messdaten des Abstandssensors 28 bekannt. Da aber in dem weiteren interessierenden Bereich 82 ohnehin keine ausreichend scharfen Bilddaten zu erwarten sind, werden sie wie nicht interessierende Bereiche 76 behandelt und nicht ausgelesen. Bei einem geringeren Höhenunterschied, mit dem das niedrigere Objekt 54a noch im Tiefenschärfenbereich liegt, könnten zwei interessierende Bereiche 74, 82 konfiguriert und ausgelesen werden, sofern die Konfigurationseinheit 22 diese Funktion bietet, oder beide interessierenden Bereiche 74, 82 mit einem gemeinsamen interessierenden Bereich umhüllt werden.

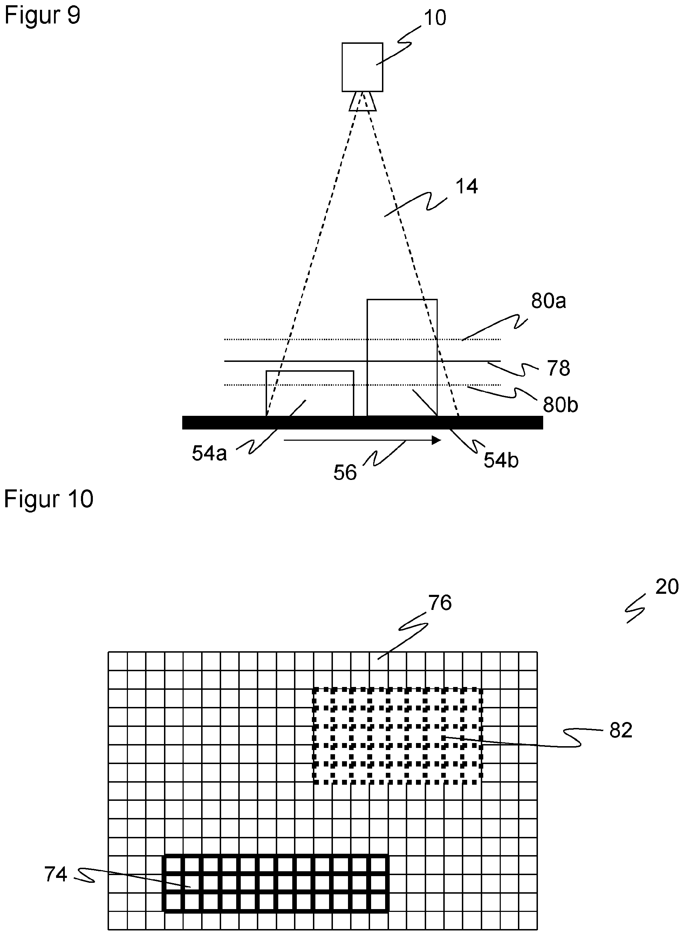

Die Figuren 9 und 10 zeigen eine zu den Figuren 7 und 8 komplementäre Situation. Die Fokuslage 78 und der zugehörige Tiefenschärfenbereich sind nun auf das niedrigere Objekt 54a eingestellt. Dementsprechend werden dessen Bilddaten ausgelesen und diejenigen des höheren Objekts 54b zusammen mit den Bereichen zwischen und neben den Objekten 54a-b direkt im Bildsensor 20 verworfen.

Somit ist es möglich, eine erste Aufnahme mit einer Fokuslage 78 für das höhere Objekt 54b und unmittelbar danach, jedenfalls solange sich das niedrigere Objekt 54a noch im Erfassungsbereich 14 befindet, eine zweite Aufnahme nach Refokussierung und damit Anpassung der Fokuslage 78 auf das niedrigere Objekte 54a zu erzeugen. Die Steuer- und Auswertungseinheit 42 ist sogar aufgrund der Messdaten des Abstandssensors 28 rechtzeitig über die geschilderte Konfliktsituation informiert und kann vorausplanen.

In einer alternativen Ausführungsform, die nicht Teil der Erfindung ist, wird die Fokuslage 78 zyklisch verändert, beispielsweise durch eine Schrittfunktion oder eine Schwingung. Es werden mehrere Aufnahmen erzeugt, so dass die Tiefenschärfenbereiche insgesamt den gesamten möglichen Abstandsbereich abdecken, vorzugsweise unter Ausschluss der Förderebene selbst, sofern nicht auch ganz flache Objekte 54 zu erwarten sind. Anhand der Messdaten des Abstandssensors 28 werden jeweils interessierende Bereiche 74 konfiguriert, die in der aktuellen Fokuslage 78 scharf aufgenommen werden. Somit bestimmt jeweils die Fokuslage 78 die interessierenden Bereiche 74. Es ist gewährleistet, dass jede Struktur scharf aufgenommen wird und unscharfe Bilddaten gar nicht erst ausgelesen werden.

Erfindungsgemäß werden somit die Vorteile eines großen Bildsensors 20 verwirklicht, ohne damit eine nicht mehr handhabbare Datenflut auszulösen. Zugleich wird das Problem unscharfer Bilddaten mehrerer aufeinanderfolgender Objekte 54a-b stark unterschiedlicher Höhen in einer einzigen großen Aufnahme gelöst. Es wird damit möglich, mit einem Bildsensor 20 jedenfalls bezüglich dessen Perspektive, etwa von oben oder von der Seite, den Strom der Objekte 54 allein abzudecken, oder jedenfalls einen möglichst großen Anteil davon.

Herkömmlich hingegen müsste die Vorverarbeitungseinheit sämtliche Bilddaten auslesen, um erst dann gegebenenfalls Bilddaten außerhalb von interessierenden Bereichen zu verwerfen. Das Vorverarbeiten erfolgt schon herkömmlich on-the-fly in einer Pipelinestruktur während des Auslesens, so dass Auslesen und Vorverarbeiten in den Zeitanforderungen praktisch nicht unterschiedlich zu betrachten sind. Für einen Bildsensor 20 hoher Auflösung erfordert dies eine Verarbeitungszeit von beispielsweise 25 ms und limitiert damit die Aufnahmefrequenz oder Framerate auf 40 Hz. Durch komplexere Bildverarbeitungsschritte wie das Decodieren verschärft sich das noch, die mögliche Aufnahmefrequenz sinkt weiter ab. Folgen nun zwei Objekte sehr unterschiedlicher Höhe dicht aufeinander, so kommt womöglich eine zweite Aufnahme nach Refokussieren zu spät. Erfindungsgemäß dagegen wird von Anfang an die Bilddatenmenge reduziert, um nur relevante Bildbereiche auszulesen. Die verringerte Datenlast ist schon in sich ein Vorteil, da damit Ressourcen geschont beziehungsweise gezielter eingesetzt werden. Die Kamera 10 wird so wahlweise kostengünstiger oder leistungsfähiger. Außerdem entfällt die strenge Begrenzung der Aufnahmefrequenz entsprechend einer Verarbeitungszeit für vollständige Bilder. Die Aufnahmefrequenz kann also insgesamt oder sogar von Fall zu Fall flexibel erhöht werden. Damit wird auch in der Situation zweier dicht aufeinanderfolgender Objekte 54a-b stark unterschiedlicher Höhe eine rechtzeitige zweite Aufnahme nach Refokussieren möglich, wie zu den Figuren 7-10 erläutert.

## Patentansprüche

1. Kameravorrichtung (10) zur Erfassung eines relativ zu der Kameravorrichtung (10) bewegten Stromes von Objekten (54), wobei die Kameravorrichtung (10) einen Bildsensor (20) mit einer Vielzahl von Lichtempfangselementen in einer Matrixanordnung zur Aufnahme von Bilddaten der Objekte (54), einen Geometrieerfassungssensor (28, 62) zum Vermessen der Objekte (54) sowie eine Steuer- und Auswertungseinheit (42) aufweist, die dafür ausgebildet ist, anhand von Messdaten des Geometrieerfassungssensors (28, 62) mindestens einen interessierenden Bereich (74) zu bestimmen, um die Auswertung der Bilddaten auf den interessierenden Bereich (74) zu begrenzen,
**dadurch gekennzeichnet,**
**dass** der Bildsensor (20) eine Konfigurationseinheit (22) aufweist, die dafür ausgebildet ist, die Ausleselogik des Bildsensor zu konfigurieren, um so das Auslesen nur eines einstellbaren Teils (70, 74) der jeweils aufgenommenen Bilddaten zu ermöglichen, dass die Steuer- und Auswertungseinheit (42) dafür ausgebildet ist, nur einen anhand des interessierenden Bereichs (70, 74) bestimmten Teil der Bilddaten aus dem Bildsensor (20) auszulesen und dass die Steuer- und Auswertungseinheit (42) eine Vorverarbeitungseinheit (44) aufweist, um Bilddaten aus dem Bildsensor (20) auszulesen und vorzuverarbeiten, wobei die Vorverarbeitungseinheit (44) " derart ausgelegt ist, dass das Auslesen und Vorverarbeiten der vollständigen Bilddaten einer Aufnahme des Bildsensors (20) eine vollständige Vorverarbeitungszeit benötigen würde, und dass der Bildsensor (20) mit einer Aufnahmefrequenz betrieben ist, die zwischen zwei Aufnahmen weniger Zeit für die Vorverarbeitung lässt als die vollständige Vorverarbeitungszeit

2. Kameravorrichtung (10) nach Anspruch 1,
wobei die Steuer- und Auswertungseinheit (42) dafür ausgebildet ist, den mindestens einen interessierenden Bereich (70, 74) und/oder den ausgelesenen Teil der Bilddaten zwischen den Aufnahmen anzupassen.

3. Kameravorrichtung (10) nach Anspruch 1 oder 2,
wobei die Aufnahmefrequenz eine flexible Aufnahmefrequenz ist.

4. Kameravorrichtung (10) nach einem der vorhergehenden Ansprüche,
wobei die Konfigurationseinheit (22) für eine Auswahl von Bildzeilen ausgebildet ist.

5. Kameravorrichtung (10) nach einem der vorhergehenden Ansprüche,
wobei die Konfigurationseinheit (22) für die Auswahl eines rechteckigen Teilbereichs ausgebildet ist.

6. Kameravorrichtung (10) nach einem der vorhergehenden Ansprüche,
wobei die Steuer- und Auswertungseinheit (42) dafür ausgebildet ist, nur den Teil der Bilddaten aus dem Bildsensor (20) auszulesen, die anhand eines interessierenden Bereiches (70, 74) innerhalb eines Tiefenschärfenbereichs (78, 80) des Bildsensors (20) aufgenommen sind.

7. Kameravorrichtung (10) nach einem der vorhergehenden Ansprüche,
wobei die Steuer- und Auswertungseinheit (42) dafür ausgebildet ist, für einen interessierenden Bereich (82) außerhalb des Tiefenschärfenbereichs (78, 80) einen passenden Tiefenschärfenbereich (78, 80) zu bestimmen und für eine folgende Aufnahme auf den passenden Tiefenschärfenbereich (78, 80) zu refokussieren.

8. Kameravorrichtung (10) nach einem der vorhergehenden Ansprüche,
wobei die Steuer- und Auswertungseinheit (42) dafür ausgebildet ist, den mindestens einen interessierenden Bereich (70, 74) anhand eines Tiefenschärfenbereichs des Bildsensors (20) zu bestimmen.

9. Kameravorrichtung (10) nach einem der vorhergehenden Ansprüche,
wobei die Steuer- und Auswertungseinheit (42) dafür ausgebildet ist, in den Bilddaten Codebereiche (58, 60) zu identifizieren und deren Codeinhalt auszulesen.

10. Kameravorrichtung (10) nach einem der vorhergehenden Ansprüche,
wobei der Geometrieerfassungssensor (28, 62) als Abstandssensor, insbesondere als optoelektronischer Abstandssensor nach dem Prinzip des Lichtlaufzeitverfahrens ausgebildet ist.

11. Kameravorrichtung (10) nach einem der vorhergehenden Ansprüche,
wobei der Geometrieerfassungssensor (28) mit dem Bildsensor (20) in eine Kamera (10) integriert ist, um die Objekte (54) vor der Aufnahme der Bilddaten zu vermessen.

12. Kameravorrichtung (10) nach einem der vorhergehenden Ansprüche,
die einen Geschwindigkeitssensor für eine Bestimmung der Geschwindigkeit des Stromes aufweist und/oder wobei die Steuer- und Auswertungseinheit (42) dafür ausgebildet ist, anhand der Messdaten des Geometrieerfassungssensors (28, 62) und/oder der Bilddaten die Geschwindigkeit des Stromes zu bestimmen.

13. Kameravorrichtung (10) nach einem der vorhergehenden Ansprüche,
die stationär an einer Fördereinrichtung (52) montiert ist, die die Objekte (54) in einer Förderrichtung (56) fördert.

14. Kameravorrichtung (10) nach einem der vorhergehenden Ansprüche,
die mindestens einen Bildsensor (20) für eine Aufnahme des Stromes von oben und/oder mindestens einen Bildsensor (20) für eine Aufnahme des Stromes von der Seite aufweist.

15. Verfahren zur Erfassung eines bewegten Stromes von Objekten (54), wobei mit einem Bildsensor (20) mit einer Vielzahl von Lichtempfangselementen in einer Matrixanordnung Bilddaten der Objekte (54) aufgenommen werden, die Objekte (54) mit einem Geometrieerfassungssensor (28, 62) vermessen werden und anhand von Messdaten des Geometrieerfassungssensors (28, 62) mindestens ein interessierender Bereich (70, 74) bestimmt wird, um die Auswertung der Bilddaten auf den interessierenden Bereich (70, 74) zu begrenzen,
**dadurch gekennzeichnet,**
**dass** der Bildsensor (20) konfiguriert wird, um nur einen anhand des interessierenden Bereichs (70, 74) bestimmten Teil der Bilddaten aus dem Bildsensor (20) auszulesen, dass eine Vorverarbeitungseinheit (44) Bilddaten aus dem Bildsensor (20) ausliest und vorverarbeitet, wobei die Vorverarbeitungseinheit (42) derart ausgelegt ist, dass das Auslesen und Vorverarbeiten der vollständigen Bilddaten einer Aufnahme des Bildsensors (20) eine vollständige Vorverarbeitungszeit benötigen würde, und dass der Bildsensor (20) mit einer Aufnahmefrequenz betrieben wird, die zwischen zwei Aufnahmen weniger Zeit für die Vorverarbeitung lässt als die vollständige Vorverarbeitungszeit.

## Claims

1. A camera device (10) for detecting a stream of objects (54) moving relative to the camera device (10), the camera device (10) comprising an image sensor (20) having a plurality of light-receiving elements in a matrix arrangement for recording image data of the objects (54), a geometry detection sensor (28, 62) for measuring the objects (54), and a control and evaluation unit (42) configured to determine at least one region of interest (74) on the basis of measurement data from the geometry detection sensor (28, 62) in order to limit the evaluation of the image data to the region of interest (74),
**characterized in that** the image sensor (20) comprises a configuration unit (22) to configure the reading logic of the image sensor in order to enable the reading out of only an adjustable part (70, 74) of the respectively recorded image data, **in that** the control and evaluation unit (42) is configured to read out from the image sensor (20) only a part of the image data determined on the basis of the region of interest (70, 74), and **in that** the control and evaluation unit (42) comprises a preprocessing unit (44) in order to read out and preprocess image data from the image sensor (20), wherein the preprocessing unit (44) is configured so that reading out and preprocessing the complete image data of one recording of the image sensor (20) would require a complete preprocessing time, and **in that** the image sensor (20) is operated at a recording frequency that leaves less time between two recordings for the preprocessing than the complete preprocessing time.

2. The camera device (10) according to claim 1,
wherein the control and evaluation unit (42) is configured to adjust the at least one region of interest (70, 74) and/or the read-out portion of the image data between recordings.

3. The camera device (10) according to claim 1 or 2,
wherein the recording frequency is a flexible recording frequency.

4. The camera device (10) according to any of the preceding claims,
wherein the configuration unit (22) is configured for a selection of image lines.

5. The camera device (10) according to any of the preceding claims,
wherein the configuration unit (22) is configured for the selection of a rectangular sub-area.

6. The camera device (10) according to any of the preceding claims,
wherein the control and evaluation unit (42) is configured to read out from the image sensor (20) only that part of the image data that is recorded on the basis of an area of interest (70, 74) within a depth of field range (78, 80) of the image sensor (20).

7. The camera device (10) according to any of the preceding claims,
wherein the control and evaluation unit (42) is configured to determine a matching depth of field region (78, 80) for a region of interest (82) outside the depth of field region (78, 80) and to refocus on the matching depth of field region (78, 80) for a subsequent recording.

8. The camera device (10) according to any of the preceding claims,
wherein the control and evaluation unit (42) is configured to determine the at least one region of interest (70, 74) based on a depth of field range of the image sensor (20).

9. The camera device (10) according to any of the preceding claims,
wherein the control and evaluation unit (42) is configured to identify code areas (58, 60) in the image data and to read out the code content thereof.

10. The camera device (10) according to any of the preceding claims,
wherein the geometry detection sensor (28, 62) is configured as a distance sensor, in particular as an optoelectronic distance sensor according to the principle of the time-of-flight method.

11. The camera device (10) according to any of the preceding claims,
wherein the geometry detection sensor (28) is integrated with the image sensor (20) in a camera (10) in order to measure the objects (54) prior to recording the image data.

12. The camera device (10) according to any of the preceding claims,
comprising a velocity sensor for determining the velocity of the stream and/or wherein the control and evaluation unit (42) is configured to determine the velocity of the stream on the basis of the measurement data of the geometry detection sensor (28, 62) and/or the image data.

13. The camera device (10) according to any of the preceding claims,
that is stationarily mounted on a conveyor device (52) conveying the objects (54) in a conveying direction (56).

14. The camera device (10) according to any of the preceding claims,
comprising at least one image sensor (20) for recording the stream from above and/or at least one image sensor (20) for recording the stream from the side.

15. A method for detecting a moving stream of objects (54), wherein image data of the objects (54) are recorded by an image sensor (20) having a plurality of light-receiving elements in a matrix arrangement, the objects (54) are measured with a geometry detection sensor (28, 62) and at least one region of interest (70, 74) is determined on the basis of measurement data of the geometry detection sensor (28, 62) in order to limit the evaluation of the image data to the region of interest (70, 74), 62), and at least one region of interest (70, 74) is determined on the basis of measurement data from the geometry detection sensor (28, 62) in order to limit the evaluation of the image data to the region of interest (70, 74),
**characterized in that** the image sensor (20) is configured in order to read out only a part of the image data from the image sensor (20) that is determined on the basis of the region of interest (70, 74), **in that** a preprocessing unit (44) reads out and preprocesses image data from the image sensor (20), wherein the preprocessing unit (42) is configured so that reading out and preprocessing the complete image data of a recording of the image sensor (20) would require a complete preprocessing time, and **in that** the image sensor (20) is operated with a recording frequency that leaves less time between two recordings for the preprocessing than the complete preprocessing time.

## Revendications

1. Dispositif de caméra (10) pour la détection d'un flux d'objets (54) se déplaçant par rapport au dispositif de caméra (10), le dispositif de caméra (10) comprenant un capteur d'image (20) avec une pluralité d'éléments de réception de lumière dans un arrangement matriciel pour enregistrer des données d'image des objets (54), un capteur de détection géométrique (28, 62) pour mesurer les objets (54), ainsi qu'une unité de commande et d'évaluation (42) configurée pour déterminer au moins une région d'intérêt (74) sur la base des données de mesure du capteur de détection géométrique (28, 62) afin de limiter l'évaluation des données d'image à la région d'intérêt (74),
**caractérisée en ce que** le capteur d'image (20) comprend une unité de configuration (22) pour configurer la logique de lecture du capteur d'image afin de permettre ainsi seulement la lecture d'une partie ajustable (70, 74) des données d'image respectivement enregistrées, **en ce que** l'unité de commande et d'évaluation (42) est configurée pour ne lire du capteur d'image (20) qu'une partie des données d'image déterminée sur la base de la région d'intérêt (70, 74), et **en ce que** l'unité de commande et d'évaluation (42) comprend une unité de prétraitement (44) afin de lire et de prétraiter des données d'image à partir du capteur d'image (20), dans lequel l'unité de prétraitement (44) est configurée de telle sorte que la lecture et le prétraitement des données d'image complètes d'un enregistrement du capteur d'image (20) nécessiteraient un temps de prétraitement complet, et **en ce que** le capteur d'image (20) fonctionne à une fréquence d'enregistrement qui laisse moins de temps entre deux enregistrements pour le prétraitement que le temps de prétraitement complet.

2. Dispositif de caméra (10) selon la revendication 1,
dans lequel l'unité de commande et d'évaluation (42) est configurée pour ajuster ladite au moins une région d'intérêt (70, 74) et/ou la partie lue des données d'image entre les enregistrements.

3. Dispositif de caméra (10) selon la revendication 1 ou 2,
dans lequel la fréquence d'enregistrement est une fréquence d'enregistrement flexible.

4. Dispositif de caméra (10) selon l'une des revendications précédentes,
dans lequel l'unité de configuration (22) est configurée pour une sélection de lignes d'image.

5. Dispositif de caméra (10) selon l'une des revendications précédentes,
dans lequel l'unité de configuration (22) est configurée pour la sélection d'une zone partielle rectangulaire.

6. Dispositif de caméra (10) selon l'une des revendications précédentes,
dans lequel l'unité de commande et d'évaluation (42) est configurée pour lire à partir du capteur d'image (20) uniquement la partie des données d'image qui est enregistrée sur la base d'une zone d'intérêt (70, 74) à l'intérieur d'une zone de profondeur de champ (78, 80) du capteur d'image (20).

7. Dispositif de caméra (10) selon l'une des revendications précédentes,
dans lequel l'unité de commande et d'évaluation (42) est configurée pour déterminer une zone de profondeur de champ appropriée (78, 80) pour une zone d'intérêt (82) en dehors de la zone de profondeur de champ (78, 80) et pour refocaliser sur la zone de profondeur de champ appropriée (78, 80) pour un enregistrement ultérieur.

8. Dispositif de caméra (10) selon l'une des revendications précédentes,
dans lequel l'unité de commande et d'évaluation (42) est configurée pour déterminer ladite au moins une région d'intérêt (70, 74) sur la base d'une zone de profondeur de champ du capteur d'image (20).

9. Dispositif de caméra (10) selon l'une des revendications précédentes,
dans lequel l'unité de commande et d'évaluation (42) est configurée pour identifier les zones de code (58, 60) dans les données d'image et pour lire leur contenu de code.

10. Dispositif de caméra (10) selon l'une des revendications précédentes,
dans lequel le capteur de détection géométrique (28, 62) est configuré comme un capteur de distance, en particulier comme un capteur de distance optoélectronique selon le principe de la méthode du temps de vol.

11. Dispositif de caméra (10) selon l'une des revendications précédentes,
dans lequel le capteur de détection géométrique (28) est intégré avec le capteur d'image (20) dans une caméra (10) afin de mesurer les objets (54) avant l'enregistrement des données d'image.

12. Dispositif de caméra (10) selon l'une des revendications précédentes,
comprenant un capteur de vitesse pour déterminer la vitesse du flux et/ou dans lequel l'unité de commande et d'évaluation (42) est configurée pour déterminer la vitesse du flux sur la base des données de mesure du capteur de détection géométrique (28, 62) et/ou des données d'image.

13. Dispositif de caméra (10) selon l'une des revendications précédentes,
qui est monté de manière stationnaire sur un dispositif de transport (52) acheminant les objets (54) dans une direction de transport (56).

14. Dispositif de caméra (10) selon l'une des revendications précédentes,
comprenant au moins un capteur d'image (20) pour enregistrer le flux par le haut et/ou au moins un capteur d'image (20) pour enregistrer le flux par le côté.

15. Procédé de détection d'un flux d'objets (54) mouvant, dans lequel des données d'image des objets (54) sont enregistrées par un capteur d'image (20) avec une pluralité d'éléments de réception de lumière dans un arrangement matriciel, les objets (54) sont mesurés à l'aide d'un capteur de détection géométrique (28, 62) et au moins une région d'intérêt (70, 74) est déterminée sur la base des données de mesure du capteur de détection géométrique (28, 62) afin de limiter l'évaluation des données d'image à la région d'intérêt (70, 74),
**caractérisé en ce que** le capteur d'image (20) est configuré pour ne lire qu'une partie des données d'images du capteur d'image (20) déterminée sur la base de la région d'intérêt (70, 74), **en ce qu'**une unité de prétraitement (44) lit et prétraite les données d'images du capteur d'image (20), dans lequel l'unité de prétraitement (44) est configurée de telle sorte que la lecture et le prétraitement des données d'image complètes d'un enregistrement du capteur d'image (20) nécessiteraient un temps de prétraitement complet, et que le capteur d'image (20) fonctionne à une fréquence d'enregistrement qui laisse moins de temps entre deux enregistrements pour le prétraitement que le temps de prétraitement complet.
